Europäisches Patentamt

European Patent Office

Office européen des brevets

(19)

(11) **EP 0 721 185 A2**

(12) **EUROPEAN PATENT APPLICATION**

(43) Date of publication:
    **10.07.1996 Bulletin 1996/28**

(51) Int Cl.6: **G11B 27/10**, G11B 20/10,
    G11B 20/12, G11B 27/13,
    G11B 27/32

(21) Application number: **96300046.8**

(22) Date of filing: **03.01.1996**

(84) Designated Contracting States:
    **DE FR GB**

(30) Priority: **03.01.1995 US 368121**
    **08.12.1995 US**

(71) Applicant: **XEROX CORPORATION**
    **Rochester New York 14644 (US)**

(72) Inventor: **Joyce, Gerald J.**
    **San Jose, California (US)**

(74) Representative: **Goode, Ian Roy et al**
    **Rank Xerox Ltd**
    **Patent Department**
    **Parkway**
    **Marlow Buckinghamshire SL7 1YL (GB)**

(54) **High speed searching of a digital cassette**

(57)    A searching and block access method on a digitally recorded tape. The method enables a digitally recorded tape (65) to be randomly positioned to access a specific requested data block. This method does not rely on scanning the information recorded on the tape to locate a requested data block. The tape is shuttled at high speeds to randomly requested locations. Tape positioning and control is accomplished by profiling the motion required to position the tape at the requested block relative to any current tape position. A tape directory of contents and tape position is recorded on the tape and cached within the drive controller (68). The cached version of the tape directory is used for random accesses. The random access ability enables the tape implementation to perform disk storage emulation.

Figure 8

Figure 9

## Description

This invention relates to a method of randomly recording and accessing data in the form of blocks on a continuous data recording tape. Such a tape is typically contained in a two-reel tape cartridge.

Digitally recorded tape, because of its slow access time and low cost, is normally only used for back-up storage and for archives, or to access large records if long access times can be tolerated. Worst case times of 40 to 60 seconds would be typical. A hard disk or floppy is used for records that must be accessed faster, but the cost per bit is considerably higher. The reason that the access time of digital recorded tape is so long is that the current implementations scan the digital recorded information for location marks. The location marks are examined in a sequential manner until the requested location is found. There is a limit to the speed at which the recorded tape in contact with the read head can be driven while still allowing the read head to actually read location marks on the tape. Small computers use disks rather than tape as the main system mass storage memory because of this slow speed and the resulting long access time.

The top speed at which the tape can be driven would be significantly increased if the recorded tape was removed from contact with the read head. In this case, the current position of the tape and the relative distance to reach the requested target data block and an estimate of the time it would take for the tape to reach the target data block would be needed. Using this method, the tape would be advanced at high speed, retracted within the tape cartridge, to an approximate position of the target data block requested, the tape would be placed in contact with the read head(s), the exact position of the tape would be determined, and the tape would continue to be driven forward to the target data block. This method may still not be fast enough. In the many cases, after the high speed positioning approximation process, the tape may be too far from the target location mark in either a forward or reverse direction. A learning process applied to the high speed approximation process will correct most of these deficiencies.

US-A-4,398,300 and US-A-5,179,479 describe similar systems, in which mathematical equations are used to predict on a dead reckoning basis when the tape is approaching the desired target, based on the encoded motion and the thickness of the tape on the encoded reels. However, the accuracy of these systems are not sufficient to stop the tape within a suitable distance of the desired target.

Japanese Publication No. 61-85688 to Matsuda, describes a system where a random access memory contains a table of music recording numbers and a corresponding table of counter counted values. For each selection, the count of the target counter value is stored in memory, the tape starts at the beginning and advances at high speed, while counting encoder pulses until the target counter count is reached. No computation of reel rotations is described.

In order for the access time of digital recorded tape drives to improve to the point where they are competitive with disk storage systems, a considerable improvement in the worst case access time would have to be accomplished.

It is an object of the present invention to provide an improved access time for digitally recorded data on a tape cartridge.

According to the present invention there is provided a method of recording and accessing data as claimed in the accompanying claims.

The invention thus provides a method of searching a digitally recorded tape for a block of information by first mathematically determining the present location of the tape on the spool, and the number of revolutions that must be turned, and then counting the number of revolutions turned at high speed to arrive at the desired location.

This system decreases the access time by retracting the tape from the read and write head(s) and driving the tape at speeds of 1.27 m.sec$^{-1}$, or more, while the tape is contained within the tape cartridge. The system knows the tape length from the current data block to the target data block by keeping a running encoder, or line, count of tape hub rotations, locating each data block at an exact count location, and keeping a record of the position of every data block recorded on the tape.

To determine the diameter of the pack of tape on the spools, if that is not known, the supply spool is rotated through a predetermined angle and the angular displacement of the take up spool is read out. The amount of tape on the spool can be determined from these. The use of the encoder counts, as well as the tape and pack thickness, enables a superior dead reckoning estimate.

To reach a new data block, the tape is accelerated to an optimum speed, maintains that speed for the calculated time and encoder count values and then decelerates the tape, to stop it within a fraction of a data block before the start of the requested target block. The tape is then engaged into contact with the read and write heads, and proceeds in the forward read mode to the start of the requested target block.

A method of recording and accessing data on a digitally recorded tape in accordance with the invention will now be described, by way of example, with reference to the accompanying drawings, in which:-

Fig 1 is a diagram of a prior art tape deck during a tape data block access.

Fig 2 shows a tape deck configuration during a high speed tape block access.

Fig 3 shows how a tape deck can be converted from read/write to high speed transfer.

Fig 4 is a cartridge which can be used for high speed block access with this system.

Fig 5 is a diagram of the DDS blank tape cartridge initialization format for DOS disk emulation.

Fig 6 shows the disk operating system "DOS" or DOS Windows version of the removable media Tape/Disk emulation file system.

Fig 7 is a flow chart of the process of determining whether a tape format is a Tape/Disk emulation, tape emulation or a recording not recorded on this mechanism.

Fig 8 shows how the directory is cached and kept current in a single tape environment.

Fig 9 shows how the directories are cached and kept current in a multiple tape loader environment.

Fig 10 is a simplified diagram of the encoder hardware.

Fig 11 is a diagram of the geometrical features of the tape on a reel.

Fig 12 is a flow chart of the tape positioning process.

Fig 13 is a diagram providing a detailed explanation of the dead reckoning process.

Fig 14 is a plan view of a typical belt driven cartridge.

Fig 15 is a view of capstan driven single input cartridge system.

Fig 16 is a view of tape format.

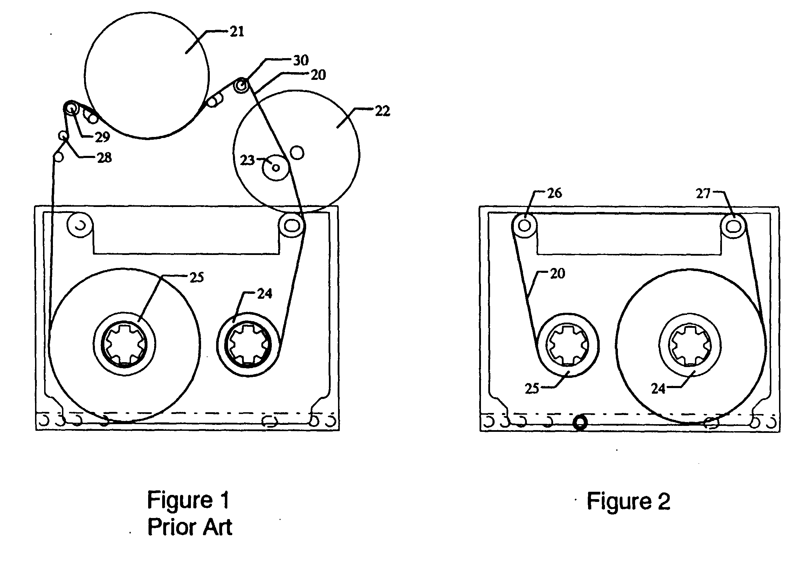

Fig 1 is a diagram of a typical tape deck, shown in the fast forward or rewind position. The tape 20 is being transferred from one reel 25, to the other 24. The proper amount of tension is sensed by the tape tension arm 28. The motor of supply reel 25 maintains the appropriate tension for the tape path to read recorded data block marks with the head wheel 21 at tape speeds up to 1.27 m.sec$^{-1}$. The capstan 22 is typically rotating at a fixed speed, but since the idler 23 is not forcing the tape against the capstan, the tape is free to travel at a faster forward speed. However, the search speed is limited by the ability of the head wheel 21 to read recorded data block marks, the complex tape path and the number of contact points between the tape and the tape deck elements.

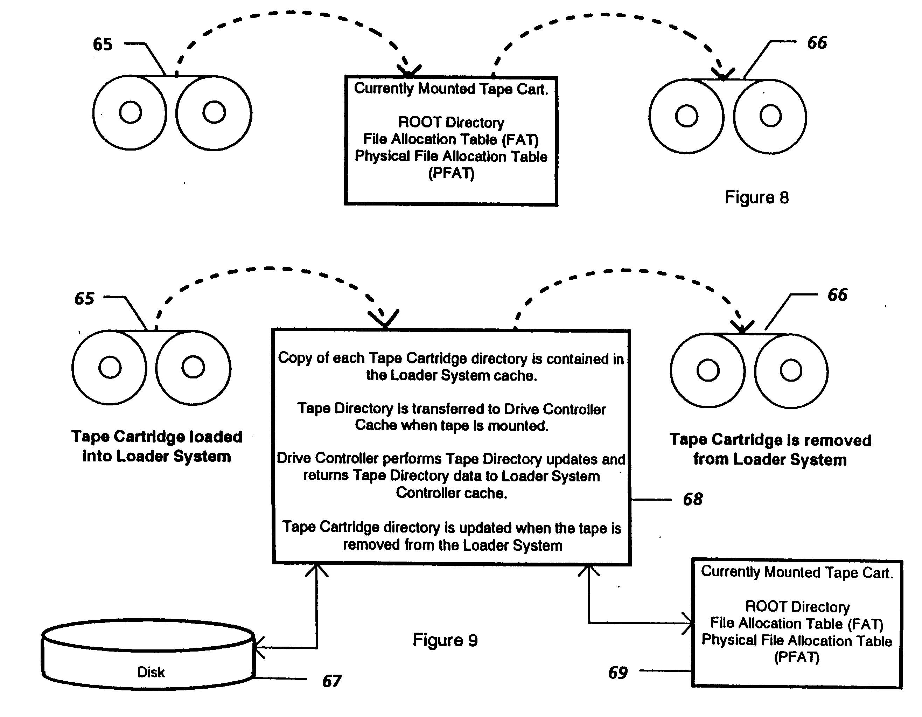

The speed of tape transfer from one reel to the other can be increased by using the tape shuttle configuration of Fig 2, where the tape 20 is simply transferred from one reel to the other. In this case, the only elements in contact with the tape are the tape guides 26, 27. The relative tape distance to the requested tape data block is determined and the tape is shuttled the predetermined distance without removing the tape from the cartridge instead of reading recorded tape position marks as in the Fig 1 configuration. The requested data block's location is retrieved from the mounted tape's cached directory, Fig 8.

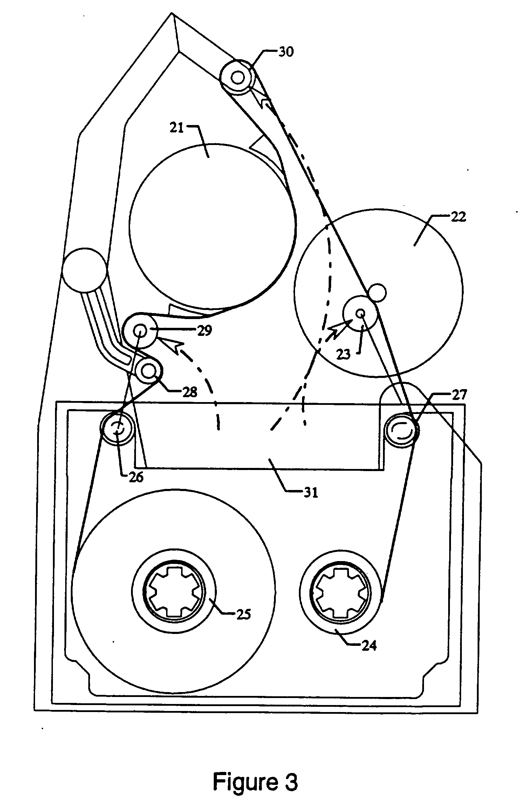

One mechanism for converting the tape deck between these two configurations is shown in Fig 3. In the read or record mode, as shown, the tape from the first reel 24 contacts the guide 27, is controlled by the nip between the capstan 22 and idler 23 which controls the tape speed, goes around the head wheel guide 30, contacts the head wheel 21, is put under tension by tensioners 28, 29, and is guided around guide 26 to the other reel 25. When a high speed tape transfer is required, the tensioner 29, the idler 23 and the guide 30 are all retracted down into space 31 so that the tape is allowed to run unimpeded directly between guides 27, 26.

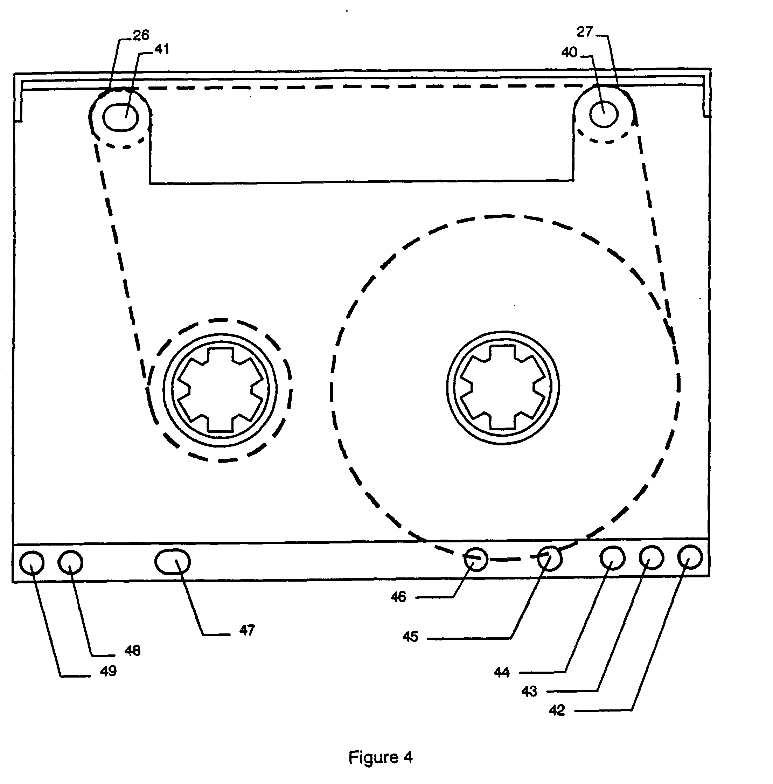

The cartridge shown in Fig 4 provides indicators to determine the tape media type and cartridge characteristics. High speed operations (over 2.29 m.sec$^{-1}$) must be limited to cartridges capable of supporting high speed operations. Fig 4 is an example of a highspeed, DDS Digital Audio Tape (DAT) industry standard cartridge having a standard hub diameter and incorporates a number of media recognition, sensing and datum holes 40 - 49. Some specific datum holes are the high speed indication hole 46, the file protect hole 48 and the datum holes 40, 41 which identify the location of guides 26, 27. The remaining holes 44, 45, 46 and 49 form an encoded group that specify the cartridge type, media thickness and length.

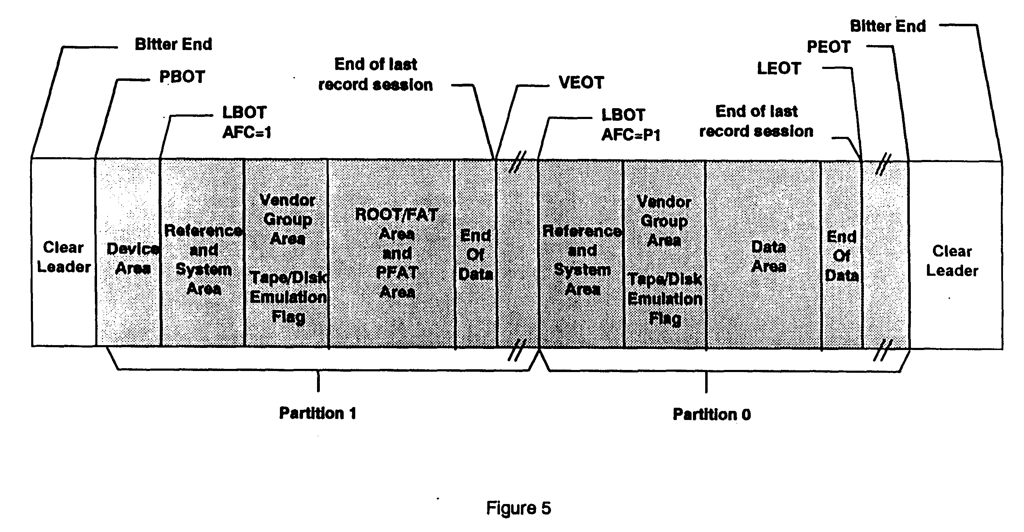

The DDS blank tape cartridge initialization for the Tape/Disk emulation format is shown in Fig 5. This figure is an example of tape formatting within the DDS standard to implement disk emulation. The tape has a length of clear leader at the beginning, followed by the start of the web, the first part of which is called the Physical Beginning Of the Tape "PBOT". The reel encoder counters are set (A and B) to initial values appropriate to the mounted cartridge's media length and thickness. This process can be applied to any other recording format, DDS is used here as an example.

The first portion of the tape is the Device Area where vendor specific data is recorded. The point on the tape immediately after the Device Area is the Logical Beginning Of the Tape,"LBOT". The supply (A) reel encoder counter value at the LBOT point is recorded on the tape. Once the encoder counter value for LBOT is recorded, this value becomes the datum for LBOT for all future sessions with the cartridge regardless of which drive mechanism the cartridge is mounted on. The DDS Absolute Frame Count (AFC) is set to "1". Future mountings of the initialized and recorded tape will retrieve and set the LBOT into the reel encoder counters to insure that minimal error is introduced by mounting on different mechanisms. Every AFC that is recorded on the tape will contain the supply (A) reel encoder counter value when it is recorded. The supply (A) reel encoder counter value (distance from the beginning of tape) for each recorded file data block is also recorded in the tape's directory file. The tape's directory file indicates the current recorded contents of the tape and the file's distance from the beginning of the tape.

Combining the capabilities of dead reckoning positioning on the length of the tape, tape recorded encoder counter value positions and tape directory caching enables a true random access capability from any point to any point on the length of the tape. To take advantage of the random access capability the tape drive controller's software or firmware emulation set will allow the tape drive to appear to be a tape or a disk to the host system. The Tape/Disk flag is set if the mounted tape cartridge is recorded to emulate a disk.

Fig 5 shows an example of a tape recorded for the DOS-Windows operating system mass storage environment. The tape contains two partitions for the Tape/Disk emulation. The first partition (Partition 1) contains tape directory and storage allocation information. The second partition (Partition 0) contains the stored file data blocks. Once the tape cartridge is mounted, directory and storage allocation data (ROOT/FAT and PFAT Area) are cached in the controller and all further updates (additional tape record sessions) will be made to the cached copy of the tape directory. The updated directory and storage allocation data are appended after the previously retrieved directory and storage allocation data recording when the tape cartridge is removed from the system.

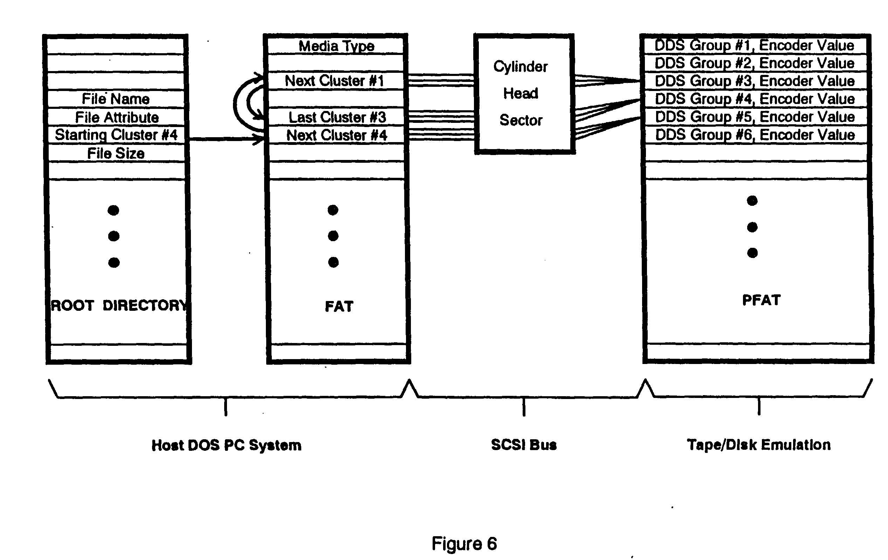

The first tape area following the clear leader is the Device Area. The next tape area is the Reference and System Area. Between the two areas is the Logical Beginning Of Tape "LBOT" in which is recorded the encoder counter value or distance to PBOT for Partition 1. In the next tape area, there is space for recording the physical file allocation table " PFAT" which is a table in which each line is an identification of a data block and the encoder count value of the tape location for that block. Also recorded in this area is the DOS ROOT directory, to be described with reference to Fig 6, and the DOS File Allocation Table (FAT). ROOT and FAT are DOS specific data that must be supplied to DOS or DOS-Windows each time the tape cartridge is mounted. During the course of using the tape, as files are written or modified, these tables will be created or updated as required. Also in this data area will be a space for the tape directory position table if the tape is not being used in the disk emulation mode. "VEOT", Virtual End Of Tape, separates the two partitions. In all cases, all files will in this example be recorded to be compatible with the DDS DAT format standard. Finally, data is entered into Partition 0, the data partition. At the conclusion of each data recording session the Logical End Of Tape " LEOT" is recorded. LEOT is overwritten at the start of each recording session.

The initial recording session of Partition 0 will carry an identical Reference and System Area and Vendor Group Area as in Partition 1 except, the Device Area will not be included since the device information will be identical to that of Partition 1. Subsequent recordings within Partition 1 can continue until the Physical End of Tape "PEOT" is encountered, followed by the trailing clear leader.

Fig 6 shows the disk operating system "DOS" or "DOS Windows" version of the removable media Tape/Disk emulation file system. The Physical File Allocation Table "PFAT" segments the tape storage into units called DDS Groups. Here the Physical File Allocation Table shows the tape being segmented into DDS Groups, each having a unique encoder counter value. The host DOS PC system will request a file in its ROOT directory based on the file name. The file's attribute, the file's size, and file's starting Cluster will be examined. The DOS File Allocation Table "FAT" allocates mass storage in units called Clusters. Clusters are marked as unused or used as storage is consumed. The starting Cluster retrieved during the file access process indexes to the physical start of the storage that was previously allocated for the stored file. Assume Cluster #4 for the example shown. Each allocated Cluster will point to the next allocated Cluster for the stored file until the last Cluster is encountered. Finally, the SCSI bus will pass the indexed Cluster access address to the Tape/Disk emulator in the form of a physical storage address; Sector, Head and Cylinder designations. The tape is emulating a Tape/Disk in this case, and the PFAT table will output the corresponding encoder counter value for the DDS group chosen.

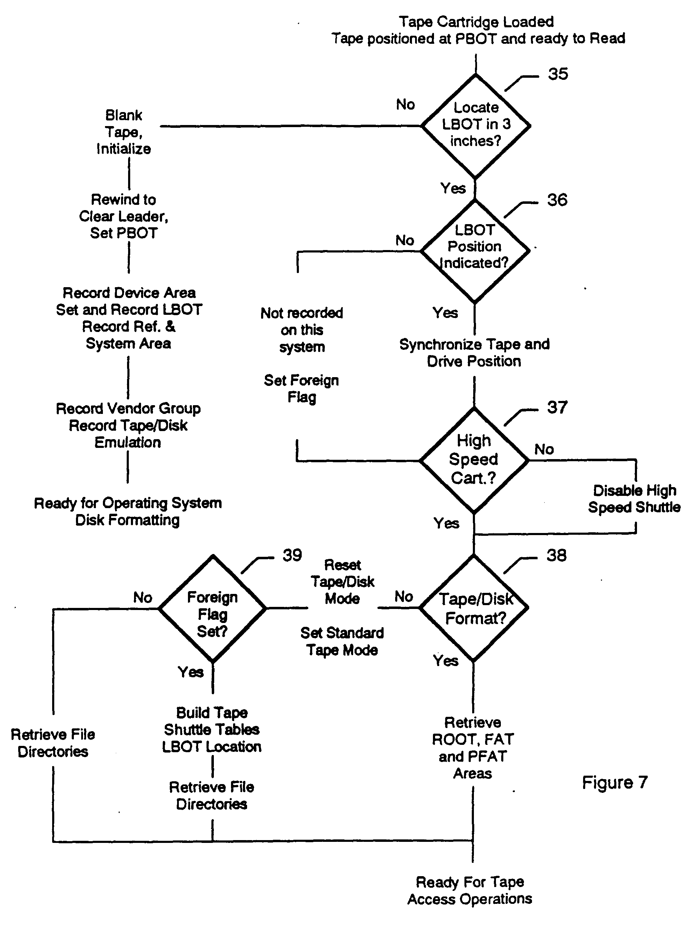

When a tape is mounted on the drive, the system must recognize the tape as either having a Tape/Disk emulation format, a native tape format or a tape format that is foreign to this mechanism, or not understood. The process, which is consistent with DDS/DAT industry standards, is illustrated in Fig. 7.

At step 35 the tape is read for a maximum of 508 mm to locate a Logical Beginning Of Tape (LBOT) mark. If there is none, the tape is assumed to be blank and not initialized. The tape is initialized by recording all of the data areas shown in Partition 1 and Partition 0 of Fig. 5. If the LBOT mark is found in the initial 508 mm, but an LBOT encoder counter value is not detected in step 36 this is an indication the tape was not recorded on a compatible mechanism. A flag that identifies the tape as foreign is set. If the LBOT encoder counter value position is indicated, in step 36, the tape cartridge and drive mechanism are synchronized. The A and B encoder counter values are set to reflect the LBOT offset from PBOT. The Physical Beginning of Tape (PBOT) occurs at the transition from clear leader to recording media on the takeup reel (B). The LBOT is recorded shortly after PBOT position was encountered. The LBOT was previously stored on the tape. This value is set into the reel motor encoder counters of the drive mechanism and the tape identification process proceeds.

Next the cartridge data holes are inspected at step 37 to determine whether the cartridge is capable of high speed motion. If not, the high speed search capability will be disabled and the tape shuttle speed is limited to 2.29 m.sec$^{-1}$. Finally, the Tape/Disk emulation flag, located within the vendor group, is read at step 38. If this flag is not set, the foreign flag is inspected at step 39. If the tape is foreign, the LBOT must be determined; in either case the file directories are retrieved, and position tables are cached within the controller. If the Tape/Disk flag is set, the ROOT, FAT and PFAT directories are stored into the drive's controller and the tape is ready for access operations.

In general, in applications where a single tape is used in a drive, all the recorded tape content information is cached and kept in the drive's controller while the tape is being used. Modifications to the current mounted tape's contents are stored into the cached copy of the tape's contents. The revised cached copy of the tape's contents is written onto the tape before the tape is removed from the drive. The recorded tape's contents are loaded back into the drive controller's cache when the tape is again mounted on the drive. Fig 8 shows this process. When the tape 65 is mounted on the drive, current tape information, including the ROOT Directory, the File Allocation Table (FAT), and the Physical File Allocation Table (PFAT), (if not a Tape/Disk tape the tape directory) will be loaded into the drive controller's cache. As the tape is being used to store data, these tables will be updated in the drive controller's cached copy. All of these modifications will then be recorded as a separate updated copy of the ROOT Directory, FAT and PFAT onto the tape, 66, before it is removed from the drive.

A problem arises when a tape is removed from the drive in that the drive loses track of the current position of the physical tape on the reels unless the tape is position at the PBOT before removal. That is, after the tape is removed from the drive, the tape may be wound or unwound a significant amount before being unloaded or loaded onto the drive. To insure against this adversely affecting the system, a tape is rewound back to the beginning PBOT before it is reused in the system. Of course, this takes considerable time.

This rewinding of tapes can be avoided by using an automatic tape loader which controls a number of tapes, as shown in Fig 9. A number of tapes, 65, are installed in a loader, and as each one is mounted on the drive, all of the directory and table information is read into the automatic loader system controller, 68, and into the drive controller, 69, as was the system in the previous case. The difference is that when the tape is first mounted on the drive the tape directories are stored into the automatic loader system's disk, 67, and the tape drive controller cache. When the tape is removed from the drive, if any modifications have been made, the automatic loader's disk is updated rather than the tape. The last position of the tape is also saved. This provides the capability to remove the tape from the drive at the current position. The tape does not have to be rewound to record the updates. The tape updates are performed when the tape is removed from the system or at a nonpeak operating time of the system. The next time the tape is mounted on the drive, the tape does not have to be restarted from the beginning since it will be known what the last tape position was and that the tape was not moved in the interim.

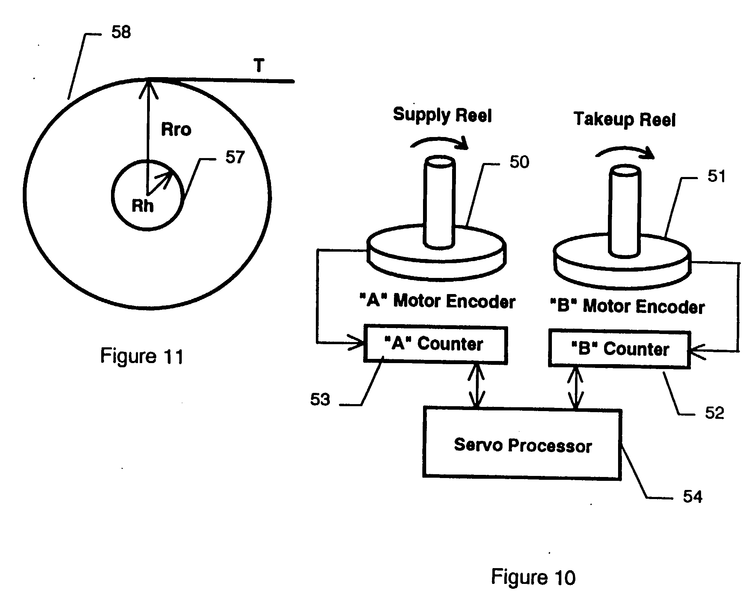

The position of every record on the tape is associated with a count of encoder pulses which starts from the maximum count, for the identified tape length, at the start of the tape and decrements as the tape is positioned toward the end of the tape. The hardware for generating this count is shown in Fig. 10. The supply reel, 50, and the take-up reel, 51, are equipped with encoders, the pulses of which are counted by counters, 53, 52. These counts are then supplied on a continuous basis to the servo processor, 54, which associates every recorded data block location on the tape with its associated line count.

As shown in Fig. 11 the tape is wound on each hub which has a radius Rh, the radius to the outside diameter of the tape is shown as Rro, and the thickness of one layer of tape is T. From these values, various tape properties can be calculated.

To determine the total length of tape on a reel;

let Lt = the total tape length = $T(Rro2-Rh2)/pi$.

Where T is one tape thickness.

To determine the relationship between total tape on the reel and theta, the number of radians of tape on the reel;

let Rrc = the current tape pack radius and Rrn equal the new tape pack radius.

Then, for each revolution, Rrn = Rrc-T.

To determine the amount of tape already played out, using the tape reel encoder line count;

let Lpo = the length played out,
n = the number of encoder lines, or counts, in the full pack
N = the number of lines per tape reel revolution.
Then, Lpo = $T (2Rrc \times T \times n/N - (T2n2)/N2)/pi$.

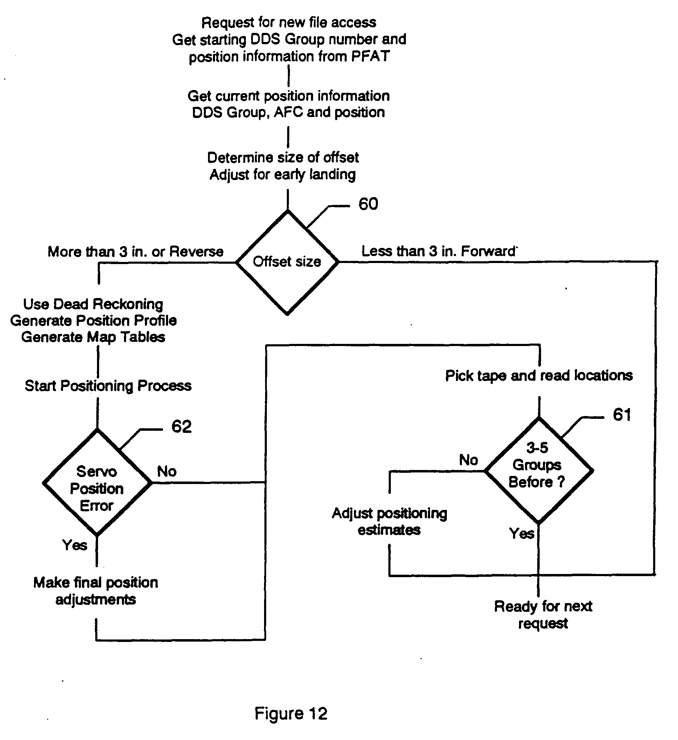

If a new tape location is requested, and it is close to the current position, the tape will simply proceed to it at a speed at which the read head can read the tape locations. However, if the requested tape location is distant, the tape deck will retract the tape into the cartridge to allow dead reckoning and high speed tape shuttle on the transport. The flow chart for making this decision is shown in Fig 12. When a request is received, the drive controller processor will get the requested DDS group number, and the encoder counter value of the target data block from the physical file allocation table. The current tape position is known by the drive controller. From this information, the distance and direction to the requested target data block can be determined.

At step 60, if the offset is calculated to be less than 75 mm in a forward direction, then the tape will be advanced forward at a speed at which the read head can determine the individual data block marks until the requested data block is found. In the event that the requested data block is in the reverse direction or if the data block is more than 75 mm from the current position the tape must be shuttled at seek speeds using the dead reckoning process.

If in step 60, the target block is determined to be more than 75 mm away in the forward direction, or at any distance in the reverse direction, the tape elements will be retracted and the dead reckoning process will be started. Note that the tape can not be driven in the reverse direction even a small amount because of the possibility of tape damage. The dead reckoning process is then started, the phases being acceleration, constant velocity and deceleration. At the end of this process, as determined at step 62, the encoder count should beat the target encoder count. If it does not, positioning motion adjustments are made to arrive at the proper encoder counter value. After the tape is positioned at the target encoder counter value the tape is extracted from the cartridge and positioned for reading. In step 61 the first data group mark is read. In the event that the first read data group mark read is greater or less than 5 data groups away from the requested data group the dead reckoning positioning algorithm is adjusted to compensate in future dead reckoning procedures.

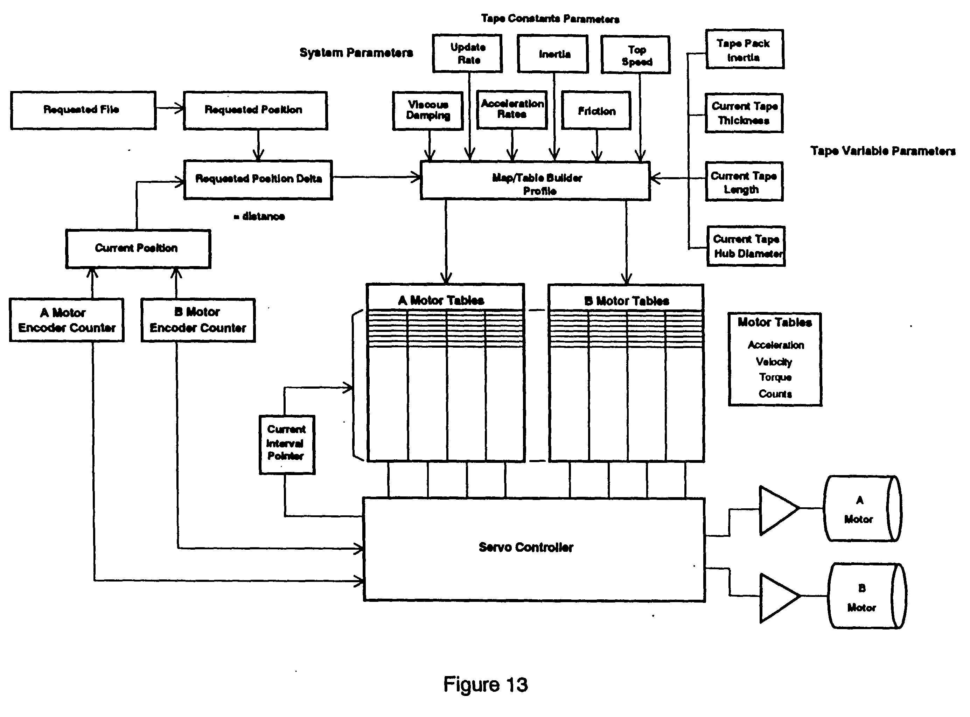

A more detailed explanation of the dead reckoning process is shown in Fig 13. When a "requested file" or data block request is received, the file name is associated with the stored, appropriate data block and tape position encoder count value. The resulting requested encoder count value tape position is compared with the current position encoder count to produce a requested encoder count position delta. The Map/Table Builder uses the count delta to determine the number of map entries and the direction of the positioning process. A number of constants associated with the tape motions process are considered; viscous damping, update rate (the length of time between updating servo parameters), drive inertia, desired maximum acceleration rates, friction and maximum tape speed. A number of tape variable parameters are calculated and considered; current pack inertia, current tape thickness, current tape length and current tape hub diameter. From these the Map/Table Builder fills the A and B motor tables with a series of desired acceleration, velocity, torque and encoder count values for each of the update intervals. The interval counter then goes through the table, one interval at a time and outputs the associated values to the A and B motor servo controllers.

On belted type or single drive tape cartridges the tape transport and tension control are completely contained within the tape cartridge. It can be an advantage in some single drive tape formats to advance the tape to a new data block at normal play speed or at multiples of the play speed without the requirement to read data headers to determine tape position or data location. Without the requirement to read data headers to determine the position of the tape, the tape can be moved at speeds that otherwise would not be possible. Access to data can be done by counting the rotations, or portions of a rotation, of the tape motion input source, and accumulating this rotational data into a counter.

This requires that inputs to the map builder be changed. The map building profile only needs to control one motor (Fig 13). Additional considerations need to be made for this type of tape cartridge configuration.

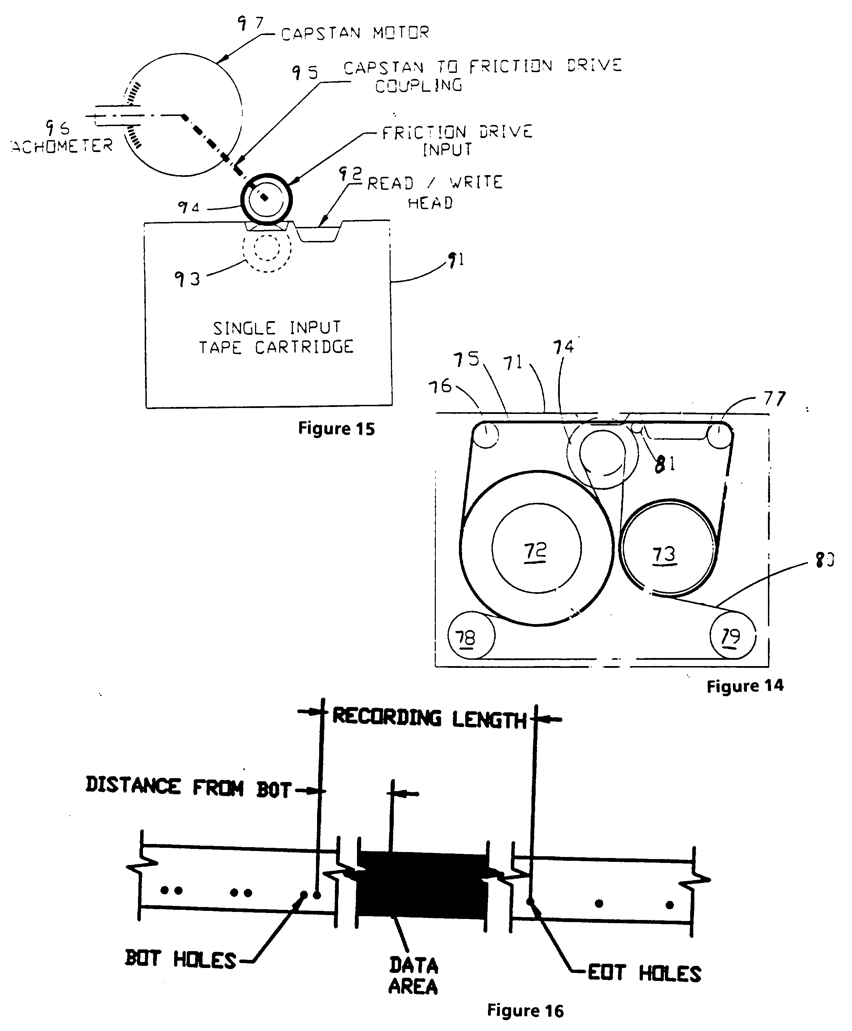

Fig 14 provides a view of the basic internal parts of a belt driven cartridge, a base plate 71 supporting the tape reels 72, 73, the rollers 74, 78, 79, and the tape guides 76, 77, 81. Inputting rotational force to the input roller 74 will cause drive belt 80 to rotate which will cause tape reels 72, 73 and rollers 78, 79 to rotate. The rotation of the tape reels 72, 73 will cause the tape to move from tape reel to tape reel 73 across guides 76, 77, 81.

The drive system shown in Fig 15 depicts the drive input scheme of a single drive tape cartridge system. The cartridge 91 has a drive roller 93 which has frictional coupling to the friction drive roller 94. The friction drive roller is coupled to the capstan motor 97 by either a belt or a frictional coupling 95. The capstan motor 97 has a tachometer 96 or signal output of rotational speed. The tape in the cartridge 91 while moving across the read write head 92 has a relationship to the tachometer output of the capstan 97. The frictional components of this type of tape motion system has slippage that must be considered. This slippage becomes an additional input to the map builder of the servo positioning system.

Fig 16 shows the relationship of the physical beginning of tape (BOT), the physical end of tape (EOT) and the recorded data. The distance from a given data block to another data block can be directly related to the revolutions of the capstan motor counter. The proper correction factors for the drive ratios and the cartridge correction factors must be applied. The distance between any two data blocks can be accurately determined as a capstan motor rotational value.

The operation of a single input tape cartridge system is the same as a single reel tape system. The tape thickness and tape length are fixed, and if the single input cartridge system correction factors are applied, the distance the tape travels can be directly related to the capstan motor revolutions and encoder counts.

The differences between a single and a two reel deck are: the stretch of the drive belt is related to the internal pack tension, the difference of the internal friction of the cartridge, the update of the drive wheel friction for this drive (pinch pressure), and the effects of the bow tie tape tension pattern related to direction and distance of travel from the last reversal.

**Claims**

1. A method of randomly recording and accessing data in the form of blocks on a continuous data recording tape wound on two reels in a capstan driven single input cartridge system comprising the two reels, a drive input connected to a drive roller in the cartridge, a capstan coupled to said drive input, a motor to drive the capstan and a capstan position encoder, the method comprising the steps of:

    A. recording said data on said tape comprising the steps of:

        positioning said tape at a point where recording is to be started,

setting a capstan encoder which generates a current count of capstan rotations to a starting value,

dividing said data into a current and remaining blocks,

adding said current count to said current block,

recording said current block, which includes said current count, onto said tape while advancing said tape, thereby generating a new count, and

repeating said adding and recording steps for said remaining blocks, and

B. accessing a target block comprising the steps of:

reading said current block to determine a count,

computing a number of rotations that must be turned by said capstan to access said target block, and

driving said capstan said number of rotations.

2. A method of randomly recording and accessing data in the form of blocks on a continuous data recording tape wound on two reels in a recording system comprising the two reels, one being a supply reel, each reel having an associated hub, position encoder and motor, the method comprising the steps of:

A. recording said data on said tape comprising the steps of:

positioning said tape at a point where recording is to be started,

setting a reel encoder counter which generates a current count of reel rotations to a starting value,

dividing said data into a current and remaining blocks,

adding said current count to said current block,

recording said current block, which includes said current count, onto said tape while advancing said tape, thereby generating a new count, and

repeating said adding and recording steps for said remaining blocks, and

B. accessing a target block comprising the steps of:

reading said current block to determine a count,

computing a number of rotations that must be turned by said reel to access said target block, and

driving said tape said number of rotations.

3. The method of Claim 1 or Claim 2 wherein said recording step further comprises

adding to a first table said current count for each block, and

wherein said computing step comprises finding a difference between said count of said current block and said count of said target block, to produce a number of rotations that said capstan or said supply reel must be turned through to access said target block.

4. The method of Claim 3 wherein a disk emulation is enabled by equating emulated disk addresses with corresponding tape block locations of said first table, so that when a disk address is specified, the data block at the corresponding tape location will be accessed.

5. The method of Claim 3 wherein said computing step computes and stores in a second table a timed sequence of torques for each increment of distance, as determined by said encoder or encoders, that the reels must move so that when this sequence of torques are applied to said motor the tape will arrive at its target destination in a minimum amount of time.

Figure 1
Prior Art

Figure 2

EP 0 721 185 A2

Figure 3

Figure 4

Bitter End

PEOT

LEOT

End of last
record session

VEOT

LBOT
AFC=P1

| Clear
Leader | | End
Of
Data | Data
Area | Vendor
Group
Area | Reference
and
System
Area |

Tape/Disk
Emulation
Flag

Partition 0

End of last
record session

LBOT
AFC=1

Bitter End

PBOT

| End
Of
Data | ROOT/FAT
Area
and
PFAT
Area | Vendor
Group
Area | Reference
and
System
Area | Device
Area | Clear
Leader |

Tape/Disk
Emulation
Flag

Partition 1

Figure 5

| | | | | | | |
|---|---|---|---|---|---|---|
| | | | | | | |
| File Name | | Media Type | | | DDS Group #1, Encoder Value | |
| File Attribute | | Next Cluster #1 | | Cylinder | DDS Group #2, Encoder Value | |
| Starting Cluster #4 | | | | Head | DDS Group #3, Encoder Value | |
| File Size | | Last Cluster #3 | | | DDS Group #4, Encoder Value | |
| | | Next Cluster #4 | | Sector | DDS Group #5, Encoder Value | |
| | | | | | DDS Group #6, Encoder Value | |

ROOT DIRECTORY    FAT    PFAT

Host DOS PC System          SCSI Bus          Tape/Disk Emulation

Figure 6

Tape Cartridge Loaded
Tape positioned at PBOT and ready to Read

**35** — Locate LBOT in 3 inches?

No → Blank Tape, Initialize

↓ Rewind to Clear Leader, Set PBOT

↓ Record Device Area Set and Record LBOT Record Ref. & System Area

↓ Record Vendor Group Record Tape/Disk Emulation

↓ Ready for Operating System Disk Formatting

Yes ↓

**36** — LBOT Position Indicated?

No → Not recorded on this system

Set Foreign Flag

Yes ↓ Synchronize Tape and Drive Position

**37** — High Speed Cart.?

No → Disable High Speed Shuttle

Yes ↓

**38** — Tape/Disk Format?

No → Reset Tape/Disk Mode

Set Standard Tape Mode

Yes ↓ Retrieve ROOT, FAT and PFAT Areas

**39** — Foreign Flag Set?

No → Retrieve File Directories

Yes ↓ Build Tape Shuttle Tables LBOT Location

↓ Retrieve File Directories

Ready For Tape Access Operations

Figure 7

EP 0 721 185 A2

65

66

Currently Mounted Tape Cart.

ROOT Directory
File Allocation Table (FAT)
Physical File Allocation Table
(PFAT)

Figure 8

65

66

Copy of each Tape Cartridge directory is contained in
the Loader System cache.

Tape Directory is transferred to Drive Controller
Cache when tape is mounted.

Drive Controller performs Tape Directory updates and
returns Tape Directory data to Loader System
Controller cache.

Tape Cartridge directory is updated when the tape is
removed from the Loader System

68

Tape Cartridge loaded
into Loader System

Tape Cartridge is removed
from Loader System

Currently Mounted Tape Cart.

ROOT Directory
File Allocation Table (FAT)
Physical File Allocation Table
(PFAT)

Disk

67

Figure 9

69

T

58

Rro

57

Rh

Figure 11

**Supply Reel**

50

**"A" Motor Encoder**

"A" Counter

53

**Takeup Reel**

51

**"B" Motor Encoder**

"B" Counter

52

Servo Processor

54

Figure 10

EP 0 721 185 A2

Request for new file access
Get starting DDS Group number and
position information from PFAT

Get current position information
DDS Group, AFC and position

Determine size of offset
Adjust for early landing

— 60

More than 3 in. or Reverse — Offset size — Less than 3 in. Forward

Use Dead Reckoning
Generate Position Profile
Generate Map Tables

Pick tape and read locations

Start Positioning Process

— 62

— 61

Servo
Position
Error — No

No — 3-5
Groups
Before ?

Adjust positioning
estimates

Yes — Make final position
adjustments

Yes

Ready for next
request

Figure 12

Figure 13

Figure 15

Figure 14

Figure 16